Europäisches Patentamt

European Patent Office

Office européen des brevets

(11) Publication number: **0 092 339**
A2

# EUROPEAN PATENT APPLICATION

(21) Application number: **83301919.3**

(22) Date of filing: **06.04.83**

(51) Int. Cl.³: **B 60 K 17/14**

(30) Priority: **16.04.82 GB 8211149**

(71) Applicant: **Senger, Matthias Norbert, 41, Boothbed Lane, Goostrey Crewe (GB)**

(43) Date of publication of application: **26.10.83**
Bulletin **83/43**

(72) Inventor: **Senger, Matthias Norbert, 41, Boothbed Lane, Goostrey Crewe (GB)**

(84) Designated Contracting States: **AT BE CH DE FR IT LI LU NL SE**

(74) Representative: **Freed, Arthur Woolf et al, MARKS & CLERK 57-60 Lincoln's Inn Fields, London WC2A 3LS (GB)**

(54) **A vehicle.**

(57) A motor vehicle having a hydrostatic power transmission and comprising at least one pair of drive wheels, a hydraulic pump driven by the prime mover, a hydraulic motor associated with each wheel and connected in parallel to receive hydraulic fluid under pressure from said pump and a fluid flow divider/combiner valve which substantially equalises the fluid flow to said wheels under all operating conditions.

## A VEHICLE

The invention relates to motor vehicles of the type having a hydrostatic power transmission which are used particularly, although not exclusively, for industrial and agricultural use.

In one particular type of such vehicles, the final drive from the hydraulic motors to the driving wheels of the vehicle is effected by reduction gear boxes, chains and sprockets and axle shafts. This arrangement is complex, requires considerable space and maintenance. Clearly, the chain drives are a source of weakness and lack of maintenance results in excessive wear or breakage with consequential cost and downtime of the vehicle.

In another type of hydrostatic drive vehicle, the pump delivers pressurised hydraulic fluid directly to motors mounted in the road wheels of the vehicle and whilst such an arrangement overcomes the difficulties encountered with the above-mentioned chain and sprocket arrangement, it suffers from the main disadvantage that if one wheel should lose traction by reason of being raised from the ground, encountering an icy or muddy surface, the affected wheel spins freely, inhibiting flow of hydraulic fluid to the other wheel which thus loses traction.

The main object of this invention is to overcome this and other disadvantages referred to in the following description.

The present invention consists in a motor vehicle of the type referred to comprising at least one pair of drive wheels, a prime mover, a hydraulic pump driven by the prime mover, a hydraulic motor associated with each wheel and connected in parallel to receive hydraulic fluid under pressure from said pump and a fluid flow divider/combiner valve which substantially equalises the fluid flow to said wheels under all operating conditions.

In the accompanying drawings:-

Figure 1 is a perspective view of a motor vehicle having a hydrostatic power transmission according to the present invention,

Figure 2 is a schematic plan view showing the chassis and hydraulic circuits of the vehicle shown in Figure 1,

Figure 3 is a diagrammatic view showing details of the transmission circuit of one pair of wheels, and

Figure 4 is a schematic view of the valve assembly shown in Figure 3.

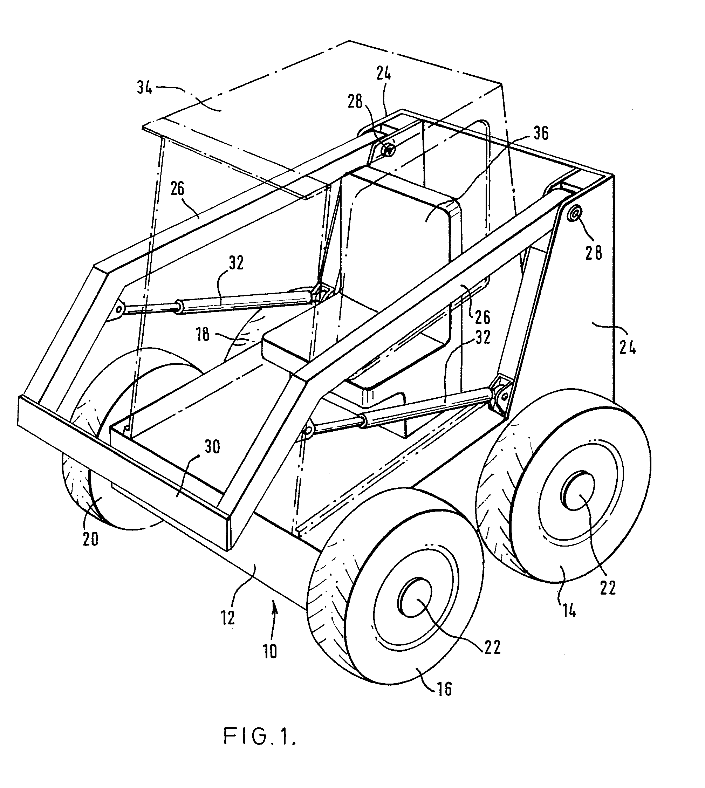

In carrying the invention into effect according to one convenient mode by way of example, the vehicle shown in Figure 1 basically comprises a chassis 10 having a base 12 supported by four wheels 14, 16, 18 and 20 each mounted on a hydraulic motor as hereinafter described.

The rear of the chassis 10 is provided with a pair of integrally formed, upwardly extending supports or walls 24 positioned, respectively, adjacent each side corner. The upper end of each support 24 has a forwardly extending operating arm 26 pivotally mounted thereon by means of a pivot shaft 28. The forward end of each arm 26 extends downwardly and the arms are interconnected by a cross-member 30.

A piston-and-cylinder arrangement 32, having its ends pivotally connected to the support 24 and operating arm 26, respectively, is positioned on each side of the chassis 10 to effect simultaneous raising and lowering of the arms 26. An accessory mounting plate (not shown) is pivotally mounted on the cross-member 30 and a further pair of piston-and-cylinder arrangements (not shown) are utilised to effect pivoting of the mounting plate.

A driving cab 34 is mounted on the chassis 10 with a drivers seat 36 positioned centrally thereon. A plurality of readily releasable floor plates (not shown) are provided giving complete and easy access to the hydraulic transmission equipment now to be described.

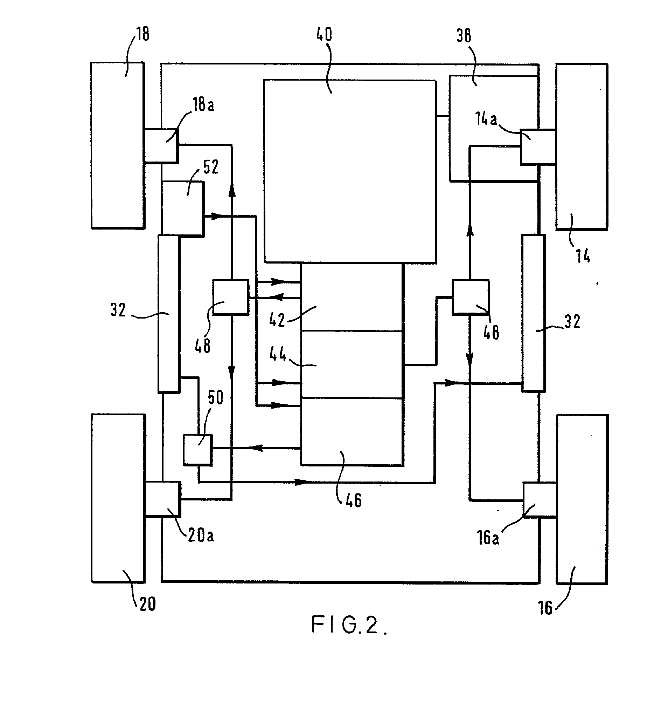

Referring to Figure 2, a compression-ignition engine 40 having a fuel tank 38 is mounted on the chassis 10 and drives three hydraulic pumps 42, 44 and 46. The pump 42 drives hydraulic wheel motors 18a and 20a mounted, respectively, in the wheels 18 and 20, whilst the pump 44 drives hydraulic wheel motors 14a and 16a mounted, respectively, in the wheels 14 and 16. Each wheel motor is of the low speed, high torque type and the feed from each of the pumps 42 and 44 passes through a valve block 48 housing a flow divider and combiner valve which equalises the quantity of oil fed to each wheel motor as hereinafter described.

The third pump 46 supplies hydraulic fluid *via* a valve bank 50 to the piston-and-cylinder arrangements 32 for lifting and lowering the pivotally mounted operating arms 26 and effecting movement of the accessory mounting plate. A tank 52 mounted within the chassis 10 houses hydraulic fluid supplying the three pumps 42,44,46.

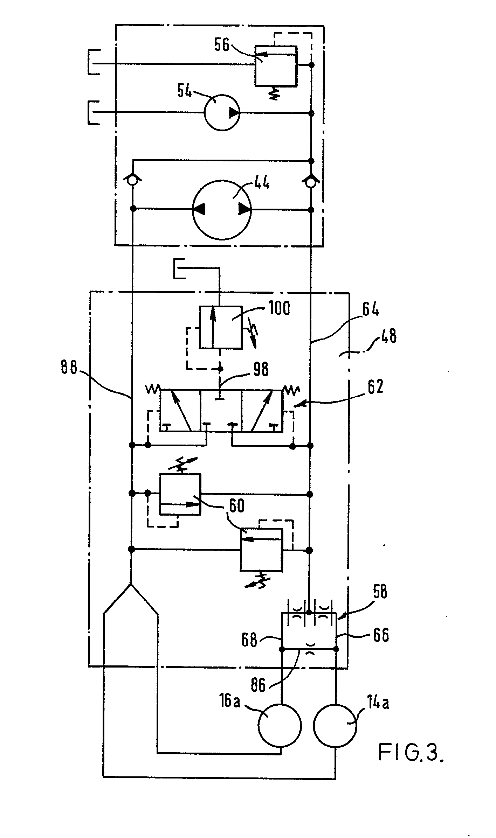

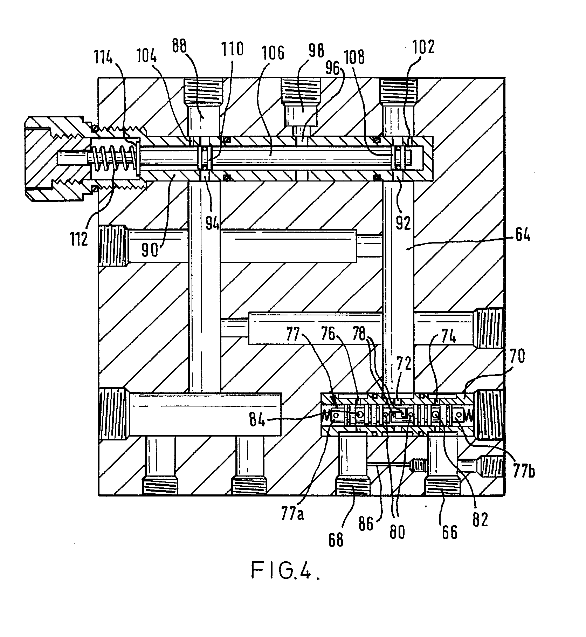

Referring now to Figures 3 and 4 which show the hydraulic circuit of the pump 44 supplying hydraulic fluid to the wheel motors 14a and 16a which are arranged in parallel. The pump 44 is of the swash plate type having a charge pump 54 delivering at a pressure of 100 p.s.i. and a pressure relief valve 56. The pressurised fluid is supplied to the valve block 48 which houses, basically, a flow divider/combiner valve 58, oppositely acting cross-line pressure relief valves 60 and a leakage valve 62 which permits cooling of the hydraulic fluid.

Assuming the vehicle is travelling in a forward direction, fluid is fed into a bore 64 in the block 48 to the flow divider/combiner valve 58 which controls the flow to separate outlet bores 66,68 supplying respectively, the wheel motors 14a,16a. The valve 58 comprises a steel sleeve 70 having three circumferential rows of radially directed apertures 72, 74,76 aligned, respectively, with the inlet bore 64 and outlet bores 66,68. A spool 77 is mounted for axial movement within the sleeve 70 and comprises two relatively movable spool members 77a,77b which are urged apart by a spring (not shown). The adjacent ends of the spool members 77a,77b are provided with interengaging abutment members 78 which limit relative axial movement therebetween.

The members 77a,77b are provided with precisely matched radially directed orifices 80,82,84, which, in the central balanced condition of the valve communicate, respectively, with the sleeve apertures 72,74,76. In operation, if flow to one outlet bore 66 or 68 increases, for example, when one wheel is off the ground, the resultant pressure drop across the spool 77 causes both spool members to move axially within the sleeve 70, thus restricting flow to that outlet and equalising the flows.

The valve block 48 is provided with a balance line 86 of 0.2mm diameter between the outlet bores 66,68 feeding the motors 14a,16a. This leakage of a finite quantity of the hydraulic fluid counteracts any slight difference in the rolling circumference of the wheel due to, for example, a variation in the wear or inflation pressure between the tyres.

The oppositely acting, pressure relief valves 60 are set to a pressure of 5000p.s.i and interconnect the bore 64 and a flow "return" bore 88. These valves are effective when stopping the vehicle by centering the swash plates, or suddenly reversing the vehicle, at which times shock pressure waves are experienced within the closed loop system. The release of hydraulic fluid from one side of the loop to the other inhibits or prevents cavitation. The valves 58,60 and balance line 86 are all equally effective during reverse flow from the pump 44.

In known systems, the hydraulic fluid is cooled by passing the fluid leaked from the pump through an oil cooler. As this leakage rate is low it may well be insufficient to cool the fluid under high ambient temperature conditions. To overcome this problem, the valve 62 is included in the present hydraulic circuit.

The valve 62 comprises a hardened steel sleeve 90 having three circumferential rows of apertures 92,94,96 communicating, respectively, with the bore 64, "return" bore 88 and a centrally disposed drain bore 98 leading to a relief valve 100 which is set to 95p.s.i. and an oil cooler (not shown). The sleeve 90 is also provided with spaced pilot apertures 102 and 104 communicating, respectively, with the bores 64 and 88. A spool 106 is axially movable in the sleeve 90 and has spaced lands 108,110 blocking, respectively, the bores 64 and 88 when the system is inoperative. The spool is resiliently urged to this position by a spring 112 and flange 114.

In operation, assuming pressurised fluid is passing through the bore 64, the fluid enters the pilot aperture 102 in the sleeve 90 causing the spool 106 to move to the left (as viewed in Figure 4) overcoming the force of the spring 112. This movement maintains the pressure side sealed by the land 108, but opens the "return" bore 88 allowing a flow of fluid through the centre of the sleeve 90 to the oil cooler (not shown) via the drain bore 98 and valve 100. When the system is reversed, the spool 106 is forced under pressure in the opposite direction (to the right as viewed in Figure 4) leaking the hydraulic fluid from the opposite bore 64.

The controls for the pumps 42,44 and 46 also the engine 40, are hand levers (not shown) positioned adjacent the seat 36 with in easy reach of the driver. These levers allow one of the pumps 42,44, to be variably supplied with fluid as required, or shut off completely, whilst the other pump is operating independently. This accelerates, decelerates, or brakes the vehicle as required, causing it to turn to the left or right as required so that the conventional steering mechanism is eliminated.

The above described vehicle is rugged, reliable in operation, versatile and requires little maintenance. The reduction in working and wearing parts is significant in relation to similar conventional vehicles. Any one of a large number of attachements may be operated from the vehicle apart from its usual industrial and agricultural uses.

Although the valves have been described above as housed in a single block, it will be appreciated such an arrangement is not essential. However, the unitary block reduces the cost of a system using hoses, pipes and fittings and separate valve assemblies. The power loss in the above-described system is reduced, it is compact and servicing is simplified.

CLAIMS

1. A motor vehicle having a hydrostatic transmission comprising a pair of drive wheels (14,16), a prime mover (40), a hydraulic pump (44) driven by the prime mover (40), a hydraulic motor (14a, 16a) associated with each wheel (14,16) and connected in parallel to receive hydraulic fluid under pressure from said pump (44) and a fluid flow divider/combiner valve (58) which substantially equalises the fluid flow to said wheels under all operating conditions.

2. A motor vehicle as claimed in claim 1, wherein each wheel (14,16) is mounted on its associated motor (14a,16a).

3. A motor vehicle as claimed in claim 1, wherein said flow combiner/divider valve (58) is a spool valve.

4. A motor vehicle as claimed in any of claims 1 to 3, wherein the flow paths to the two motors (14a,16a) are interconnected by a balance line (86) which permits the leakage of a finite quantity of fluid therebetween.

5. A motor vehicle as claimed in any of claims 1 to 4, wherein the flow paths to and from the pump (44) are interconnected by a pair of oppositely acting, pressure relief valves (60).

6. A motor vehicle as claimed in any of the preceding claims, wherein the flow paths to and from the pump (44) are interconnected by a valve (62) which permits leakage of the fluid through a cooler.

7.    A motor vehicle as claimed in claim 6, wherein the said valve (62) is a spool valve.

8.    A motor vehicle as claimed in claims 1, 5 and 7, wherein said valves (58,60,62) are housed in a unitary valve block (48).

9.    A motor vehicle as claimed in any of the preceding claims, having two pairs of drive wheels (14,16 and 18,20) positioned, respectively, on opposite sides of the vehicle.

1/4

FIG.1.

FIG.2.

0092339

3/4

FIG.3.

4/4

FIG.4.